# EUROPÄISCHE PATENTSCHRIFT

(11) **EP 1 089 638 B1**
(45) Veröffentlichungstag und Bekanntmachung des Hinweises auf die Patenterteilung: **20.08.2003**
(21) Anmeldenummer: 99927939.1
(22) Anmeldetag: 10.06.1999
(51) Int. Cl.: A23N 17/00

(54) **VERFAHREN UND EINRICHTUNG ZUM ZUBEREITEN VON VIEHFUTTERMISCHUNGEN**
METHOD AND DEVICE FOR PREPARING FODDER MIXTURES FOR LIVESTOCK
DISPOSITIF ET PROCEDE DE PREPARATION DE MELANGES ALIMENTAIRES POUR LE BETAIL

(30) Priorität: 25.06.1998 DE 19828221
(43) Veröffentlichungstag der Anmeldung: 11.04.2001
(73) Patentinhaber: WEDA-DAMMANN & WESTERKAMP GmbH, 49424 Lutten (DE)
(72) Erfinder: kl. SEXTRO, Franz-Josef, D-49377 Vechta (DE)
(74) Vertreter: Busse, Dietrich, Dipl.-Ing.
(86) Internationale Anmeldenummer: EP9903991
(87) Internationale Veröffentlichungsnummer: WO99066806

(56) Entgegenhaltungen:
- EP-A- 0 455 889
- EP-B- 0 082 366
- EP-B- 0 163 080
- DE-C- 19 521 104
- GB-A- 2 048 095
- GB-A- 2 303 079

## Beschreibung

Die Erfindung bezieht sich auf ein Verfahren zum Zubereiten von Viehfuttermischungen gemäß dem Oberbegriff des Anspruchs 1 und eine Einrichtung zu seiner Durchführung gemäß dem Oberbegriff des Anspruchs 10.

Ein Verfahren gemäß dem Oberbegriff des Anspruches 1 ist aus EP-A-0 163 080 bekannt.

Aus Gründen der Futterhygiene ist es erwünscht, daß das Viehfutter, insbesondere Flüssigfutter, einen pH-Wert hat, der zwischen 4 und 5 vorzugsweise bei etwa 4,5 liegt. Die Erfindung befaßt sich mit dem Problem einer pH-Wert-Beeinflussung von Futtermischungen, insbesondere von entsprechend großen Chargen in Wiegemischbehältern der Futterstationen von Fütterungseinrichtungen. Die Erfindung löst das Problem mit einem Verfahren gemäß Anspruch 1 und mit einer Einrichtung gemäß Anspruch 10. Hinsichtlich weiterer Ausgestaltungen wird auf die Ansprüche 2 bis 9 sowie 10 bis 12 verwiesen.

Das erfindungsgemäße Verfahren stellt sicher, daß während der Zubereitung der Futtermischung deren pH-Wert festgestellt und bei zu hohem pH-Wert dieser auf einen vorgegebenen Weg durch eine allmähliche Zugabe von Säure abgesenkt wird. Da die Zuführung von Säure im Anschluß an den eigentlichen Zubereitungsvorgang einer Charge erfolgt, ist sichergestellt, daß nicht durch Zuführen weiterer Futterbestandteile nach der pH-Wert-Einstellung noch pH-Wert Veränderungen eintreten. Zur Durchführung des Verfahrens sieht die Erfindung ferner einen Wiegemischbehälter vor, der im unteren Bereich mit einer durch die Behälterwandung hindurchgeführten pH-Wert-Meßsonde versehen ist. Der Meßfühler einer solchen Meßsonde liegt dementsprechend in einem Bereich einer besonders intensiven Futterströmung, wie sie sich unter der Wirkung des üblichen Rührwerks im Wiegemischbehälter im Zuge des Mischvorganges aufbaut. Dementsprechend ist sichergestellt, daß eintretende pH-Wert-Änderungen schnell ermittelt werden, so daß der gewünschte Endwert in der Futtercharge genau angefahren werden kann.

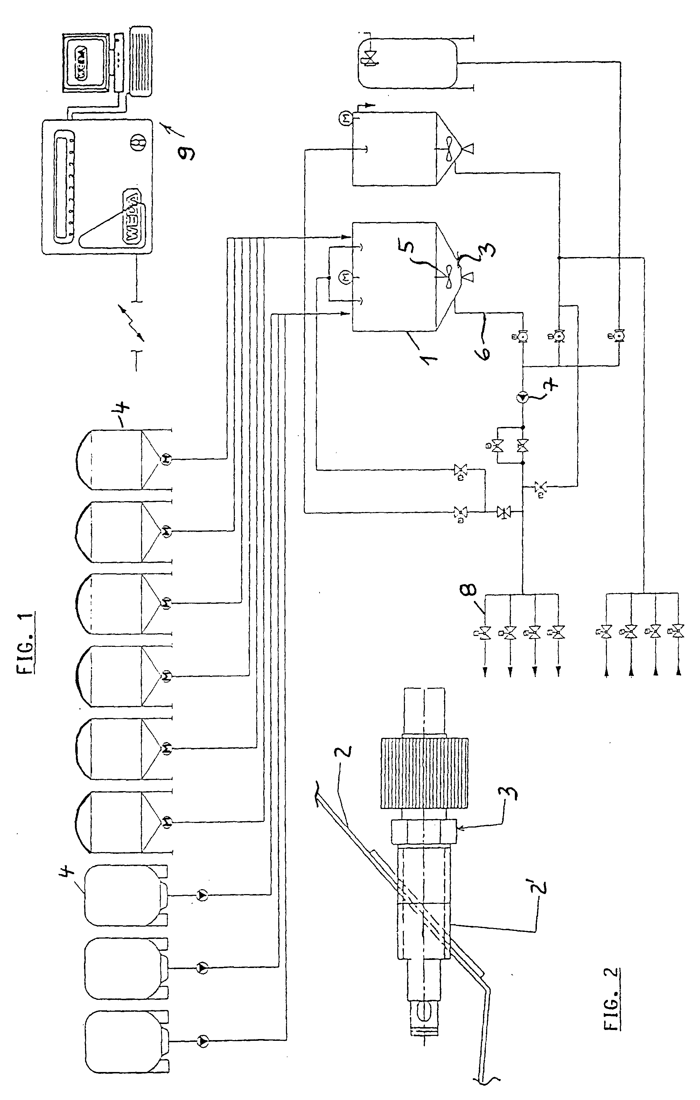

In der Zeichnung ist in Fig. 1 schematisch eine Fütterungseinrichtung veranschaulicht, und Fig. 2 zeigt einen Ausschnitt aus der Behälterwand im Bereich der pH-Wert-Meßvorrichtung.

Die Fütterungseinrichtung umfaßt einen Wiegemischbehälter 1, der im unteren Bereich eine durch die Behälterwand 2 hindurchgeführte pH-Wert-Meßsonde 3 aufweist. Die Meßsonde 3 durchgreift eine in der Behälterwandung 2 eingeschweißte Hülse 2', in der sie unter Abdichtung festgelegt ist. Der Wiegemischbehälter 1 ist aus Silos 4 mit Futterbestandteilen beschickbar und umfaßt ein motorisch angetriebenes Rührwerk 5, das zentral ebenfalls im unteren Behälterbereich umlaufende Mischwerkzeuge hat. Aus dem Bodenbereich des Wiegemischbehälters 1 mündet eine Förderleitung 6 aus, durch die mit Hilfe einer Futterpumpe 7 Futter in Verbraucherleitungen 8 förderbar ist. Ein Zentralcomputer 9 steuert die gesamte Fütterungseinrichtung anhand eines Programms, das einen pH-Wert-Programmteil umfassen kann.

Für das Zubereiten einer Futtercharge werden nacheinander flüssige und feste Bestandteile des Futters in den Wiegemischbehälter 1 eingefördert, wo die entsprechend der Zufuhr anwachsende Futtermenge ständig durchmischt wird. Schon während dieses Aufbaus der Futtercharge wird kontinuierlich oder in regelmäßigen Intervallen der pH-Wert gemessen, so daß bei Fertigstellung der Charge durch einen Ist/Soll-Wert-Vergleich entschieden werden kann, ob eine Zugabe von Säure zur Einstellung eines gewünschten pH-Wertes erforderlich ist oder nicht. Dies erledigt entweder ein den Futterzubereitungsvorgang in allen Einzelheiten steuerndes Computerprogramm, das einen pH-Wert-Programmteil umfaßt, oder die Meßsonde 3, die als Meßgerät und zugleich Steuerimpulsgeber ausgebildet sein kann, der die Säurezugabe bis zum Erreichen eines vorgegebenen, vorzugsweise einstellbaren Sollwerts steuert. Ist eine Aufsäuerung des Futters vonnöten, wird, gewissermaßen als letzter Bestandteil der Futtermittelmischung, eine ernährungsverträgliche Säure, beispielsweise Propionsäure, Essigsäure od.dgl., in entweder einem kleinen Mengenstrom kontinuierlich zugesetzt, wobei der Mischvorgang im Wiegemischbehälter 1 kontinuierlich fortgesetzt wird, oder es wird in Intervallen eine kleine Teilmenge zudosiert. Während des Zusetzens von Säure wird der pH-Wert entweder in aufeinanderfolgenden Intervallen oder kontinuierlich gemessen, so daß eine Abschaltung der kontinuierlichen oder intervallweisen Zufuhr von Säure so rechtzeitig erfolgen kann, daß nach Abschluß der Durchmischung der gewünschte pH-Wert in der Futtercharge vorliegt. Dieser beträgt vorzugsweise 4,5. Danach kann mit der Futterabgabe aus dem Wiegemischbehälter 1 begonnen werden.

## Patentansprüche

1. Verfahren zum Zubereiten von Viehfuttermischungen, insbesondere pumpfähigen Flüssigfuttermischungen, bei dem nacheinander die Futterbestandteile in einen Wiegemischbehälter eingegeben und vermischt werden, **dadurch gekennzeichnet, daß** bei oder vor Fertigstellung der Futtermischung der pH-Wert der Mischung gemessen und bei Überschreiten eines vorgegebenen Wertes während eines fortgesetzten Mischvorganges als letzte Zugabe der Futtermischung Säure solange zugegeben wird, bis der vorgebene Wert erreicht ist.

2. Verfahren nach Anspruch 1, **dadurch gekennzeichnet, daß** der pH-Wert in der Futtermischung auf etwa 4,5 eingestellt wird.

3. Verfahren nach Anspruch 1 oder 2, **dadurch gekennzeichnet, daß** eine nahrungsmittelverträgliche Säure wie Propionsäure zugesetzt wird.

4. Verfahren nach einem der Ansprüche 1 bis 3, **dadurch gekennzeichnet, daß** während des gesamten Zubereitungsvorganges einer Futtercharge der pH-Wert im Wiegemischbehälter fortlaufend oder in regelmäßigen Intervallen gemessen und nach Fertigstellung der Futtermischung während der Zugabe von Säure der pH-Wert fortlaufend gemessen wird.

5. Verfahren nach einem der Ansprüche 1 bis 4, **dadurch gekennzeichnet, daß** Säure in einem kontinuierlichen, kleinen Mengenstrom zugesetzt wird.

6. Verfahren nach einem der Ansprüche 1 bis 4, **dadurch gekennzeichnet, daß** Säure intervallweise in kleinen Teilmengen zugesetzt und in zeitlichem Abstand zur Teilmengenzugabe der pH-Wert gemessen und eine weitere Teilmengenzugabe ausgelöst oder der Zubereitungsvorgang abgeschlossen wird.

7. Verfahren nach einem der Ansprüche 1 bis 6, **dadurch gekennzeichnet, daß** der Verfahrensablauf von Beginn bis Abschluß der Futterzubereitung von einem Zentralcomputer gesteuert wird.

8. Verfahren nach Anspruch 7, **dadurch gekennzeichnet, daß** der pH-Ist/Sollwert-Vergleich vom Zentralcomputer auf der Grundlage eines pH-Wert-Steuerprogramms vorgenommen wird.

9. Verfahren nach einem der Ansprüche 1 bis 7, **dadurch gekennzeichnet, daß** der pH-Wert-Meßwertaufnehmer den Ist/Sollwert-Vergleich durchführt und unmittelbar die Säurezugabe steuert.

10. Einrichtung zur Durchführung des Verfahrens nach Anspruch 1 mit einem Wiegemischbehälter, **dadurch gekennzeichnet, daß** im unteren Bereich des Behälters (1) eine durch die Behälterwandung (2) hindurchgeführte pH-Wert-Meßsonde (3) vorgesehen ist.

11. Einrichtung nach Anspruch 10, **dadurch gekennzeichnet, daß** die Meßsonde als reiner Meßwertaufnehmer ausgebildet ist.

12. Einrichtung nach Anspruch 10, **dadurch gekennzeichnet, daß** die Meßsonde als Meßgerät und Steuerimpulsgeber ausgebildet ist.

## Claims

1. Method for preparing fodder mixtures for cattle, especially liquid pumpable fodder mixtures according to which fodder components are introduced sequentially into a weighing and mixing vessel, **characterised in that** during or before the mixing process the pH value of the mixture is measured and if a given value is exceeded, acid is added as a last ingredient to the fodder mixture during a continued mixing process until the pH reaches the said given value.

2. Method in accordance with claim 1, **characterised in that** the pH value in the fodder mixture is set to approximately 4.5.

3. Method in accordance with claims 1 or 2, **characterised in that** an acid compatible with foodstuffs, such as propionic acid, is added.

4. Method in accordance with one of claims 1 to 3, **characterised in that** during the complete preparation process of a fodder batch the pH is measured in the weighing and mixing vessel either continuously or at regular intervals and after preparation of the fodder mixture the pH is continuously measured while the acid is being added.

5. Method in accordance with one of claims 1 to 4, **characterised in that** the acid is added in a continual flow in small amounts.

6. Method in accordance with one of claims 1 to 4, **characterised in that** acid is added in intervals in small partial amounts and the pH is measured at intervals relative to the addition of the partial amounts and a further addition of a partial amount is activated or the preparation process is terminated.

7. Method in accordance with one of claims 1 to 6, **characterised in that** the process is controlled by a central computer from the start to the completion of the fodder preparation.

8. Method in accordance with claim 7, **characterised in that** the pH actual/set value comparison is performed by the central computer on the basis of a pH control program.

9. Method in accordance with one of claims 1 to 7, **characterised in that** the pH measured value recorder carries out the actual/set value comparison and directly controls the addition of the acid.

10. Device for performing the process in accordance with claim 1, with a weighing and mixing vessel, **characterised in that** pH measuring probe (3) is placed through the vessel wall (2) in the lower area of the said vessel (1).

11. Device in accordance with claim 10, **characterised in that** the measuring probe is designed purely as a measured value recorder.

12. Device in accordance with claim 10, **characterised in that** the measuring probe is designed as a measuring device and control pulse generator.

## Revendications

1. Procédé de préparation de mélanges d'aliments pour bétail, en particulier de mélanges d'aliments liquides aptes à être pompés, dans lequel les composants de l'aliment sont introduits successivement dans un récipient de mélange et de pesée pour y être mélangés, **caractérisé en ce que** lors de la préparation finale du mélange d'aliments ou avant celle-ci, la valeur du pH est mesurée et si une valeur prédéterminée est dépassée lors de la poursuite de l'opération de mélange, on ajoute au mélange comme dernier additif de l'acide jusqu'à ce que la valeur prédéterminée soit atteinte.

2. Procédé selon la revendication 1, **caractérisé en ce que** la valeur du pH du mélange d'aliments est réglée à environ 4,5.

3. Procédé selon la revendication 1 ou 2, **caractérisé en ce que** l'on ajoute un acide compatible avec des produits alimentaires, par exemple de l'acide propionique.

4. Procédé selon l'une quelconque des revendications 1 à 3, **caractérisé en ce que** pendant toute l'opération de préparation d'un lot d'aliment, la valeur du pH dans le récipient de mélange et de pesée est mesurée en permanence ou à intervalles réguliers, et après que le mélange des aliments est terminé, la valeur du pH est mesurée en permanence pendant l'addition d'acide.

5. Procédé selon l'une quelconque des revendications 1 à 4, **caractérisé en ce que** l'acide est ajouté à petit débit continu.

6. Procédé selon l'une quelconque des revendications 1 à 4, **caractérisé en ce que** l'acide est ajouté par intervalles en petites portions, la valeur du pH étant mesurée en des instants autres que ceux de l'addition des portions et déclenchant l'addition d'une autre petite portion ou arrêtant l'opération de préparation.

7. Procédé selon l'une quelconque des revendications 1 à 6, **caractérisé en ce que** le déroulement du procédé est commandé par un ordinateur central du début à a fin de la préparation de l'aliment.

8. Procédé selon la revendication 7, **caractérisé en ce que** la comparaison entre la valeur effective et la valeur de consigne du pH est effectuée par l'ordinateur central en fonction d'un programme de commande de la valeur du pH.

9. Procédé selon l'une quelconque des revendications 1 à 7, **caractérisé en ce que** l'enregistreur de valeurs de mesure du pH effectue la comparaison entre la valeur effective et la valeur de consigne et commande directement l'addition d'acide.

10. Dispositif en vue de la mise en oeuvre du procédé selon la revendication 1, avec un récipient de mélange et de pesée, **caractérisé en ce qu'**une sonde (3) de mesure de la valeur du pH qui traverse la paroi (2) de récipient est prévue dans la zone inférieure du récipient (1).

11. Dispositif selon la revendication 10, **caractérisé en ce que** la sonde de mesure est configurée comme pur enregistreur de valeurs de mesure.

12. Dispositif selon la revendication 10, **caractérisé en ce que** la sonde de mesure est configurée comme appareil de mesure et émetteur d'impulsions de commande.
